# EUROPÄISCHE PATENTSCHRIFT

(11) **EP 0 576 962 B1**
(45) Veröffentlichungstag und Bekanntmachung des Hinweises auf die Patenterteilung: **13.12.1995**
(21) Anmeldenummer: 93109911.3
(22) Anmeldetag: 22.06.1993
(51) Int. Cl.: A01D 34/70

(54) **Gerät und mit diesem schwenkbar verbundener Zubehörteil, der eine vom Gerät aus antreibbare Komponente aufweist**
Device and swivelling accessory-part connected thereto with a component which can be driven by the device
Dispositif et accessoire connecté de façon pivotante comprenant un élément entraîné par le dispositif

(30) Priorität: 01.07.1992 US 907476
(43) Veröffentlichungstag der Anmeldung: 05.01.1994
(73) Patentinhaber: DEERE & COMPANY, Moline, Illinois 61265 (US)
(72) Erfinder: Hohnl, Gary David, Slinger, Wisconsin 53086 (US)
(74) Vertreter: Feldmann, Bernhard

(56) Entgegenhaltungen:
- DE-A- 2 524 348
- US-A- 4 614 080
- US-A- 4 711 073
- US-A- 4 735 037

## Beschreibung

Die Erfindung bezieht sich auf eine aus einem Gerät und einem Zubehörteil bestehende Kombination, der mit dem Gerät horizontal schwenkbar verbunden, in einer Betriebsstellung festsetzbar und mit einer von dem Gerät aus antreibbaren Komponente versehen ist, wobei der Antrieb zwischen Gerät und Komponente eine Vorrichtung zum Unterbrechen des Antriebes aufweist.

Bei dieser Kombination, die in dem Dokument US-A-5 064 315 angedeutet ist, ist das Gerät als ein zwischen den Achsen eines Kleinschleppers angeordnetes Rasenmähwerk und der Zubehörteil als ein mit dem Mähwerksgehäuse verbundenes Gebläse ausgebildet. Dieses soll insbesondere bei nassem Gut eine Förderung in einen Grasfangbehälter unterstützen. Wie die Festsetzung des Gebläses in der Betriebsstellung erfolgt, ist diesem Dokument nicht eindeutig zu entnehmen. Offensichtlich aber ist, daß als Antrieb eine Gelenkwellenvorrichtung dient, die eine am Gerät angeschlossene Kupplung zum Unterbrechen des Antriebes vorsieht. Um das Gebläse überhaupt aus seiner Betriebsstellung verschwenken zu können, müssen zunächst entsprechende Schraubverbindungen an der Kupplung von Hand gelöst werden. Danach läßt sich das Gebläse eventuell aus seiner Betriebsstellung verschwenken, wenn zusätzlich die Festlegung an der der Schwenkverbindung abgelegenen Seite gelöst wurde.

Die der Erfindung zugrunde liegende Aufgabe wird darin gesehen, den Anschluß des Zubehörteils einschließlich seines Antriebes einfacher zu gestalten. Die Erfindung sieht deshalb vor, daß der Zubehörteil mit dem Gerät in der Betriebsstellung verriegelbar ist und die Vorrichtung zum Unterbrechen des Antriebes Betätigungsmittel aufweist, über die der Zubehörteil entriegelbar ist. Auf diese Weise erfolgt zeitgleich mit dem Entriegeln ein Ausschalten des Antriebes. Werkzeuge brauchen hierzu nicht zur Hilfe genommen zu werden.

Besonders einfach läßt sich die Erfindung ausgestalten, wenn der Antrieb zwischen Gerät und Komponente des Zubehörteils als Riementrieb ausgebildet ist und die Vorrichtung zum Unterbrechen des Antriebes eine Riemenspannvorrichtung aufweist. Eine solche Riemenspannvorrichtung ist in der Regel zwischen einer Betriebsstellung und einer den Riemen nicht mehr spannenden Stellung über das Betätigungsmittel verstellbar, wobei bei sich in der zuletzt genannten Stellung befindlicher Riemenspannvorrichtung, der Zubehörteil bereits entriegelt ist und der Riemen leicht von dem Gerät abgenommen werden kann. Danach ist der Zubehörteil einfach aus seiner Betriebsstellung fortschwenkbar. Wenn dann das Gerät mit einer Stütze versehen ist, auf die sich der Zubehörteil bei seiner Bewegung in die Betriebsstellung aufschiebt, muß der Zubehörteil dabei auch nicht noch von Hand angehoben werden. In gleich einfacher Weise läßt sich der Zubehörteil dann auch wieder in seine Betriebsstellung zurückschwenken, wenn nach einem weiteren Vorschlag der Erfindung der Zubehörteil mit einer verstellbaren Sperrklinke versehen ist, die in der Betriebsstellung des Zubehörteils selbsttätig in eine Ausnehmung in der Stütze eingreift. Beim Zurückschwenken schiebt sich der Zubehörteil auf die Stütze auf, die ein automatisches Ausrichten der Sperrklinke zur Ausnehmung bzw. Zuhaltung bewirkt. Der Zubehörteil wird verriegelt, und durch Verstellen der Riemenspannvorrichtung kann der Antrieb eingeschaltet werden, wenn zuvor der Riemen um eine entsprechende Riemenscheibe am Gerät gelegt wurde. Damit kann das Einrücken des Antriebes gleichzeitig oder fast gleichzeitig mit dem Verriegeln des Zubehörteils mit dem Gerät erfolgen.

Alle diese Vorgänge können von einer einzigen Bedienungsperson ausgeführt werden einschließlich eines Ab- oder Anbaues des Zubehörteils, wenn ferner mit Abstand zu der Stütze an dem Gerät ein Gelenkzapfen oder eine Hülse und an dem Zubehörteil eine Hülse oder ein Gelenkzapfen vorgesehen sind, wobei der Gelenkzapfen die Hülse oder die Hülse den Gelenkzapfen lösbar aufnimmt. Infolge der vorgesehenen Stütze braucht das Gelenk in der Betriebsstellung auch nicht das gesamte Gewicht des Zubehörteils aufzunehmen und in der Außerbetriebsstellung kann der Zubehörteil einfach nach oben abgezogen werden. Wartungsarbeiten lassen sich damit einfach durchführen. Außerdem ist dann auch ein Betrieb ohne Zubehörteil möglich, was in einigen Anwendungsfällen von Vorteil sein kann.

Zweckmäßig kann die Riemenspannvorrichtung eine am Zubehörteil verschwenkbar gelagerte Riemenspannscheibe aufweisen.

Zum einfachen Spannen des Riemens oder zu seinem Entspannen kann das Betätigungsmittel über eine Verbindung, die in und aus einer Übertotpunktstellung verstellbar ist, an die Riemenspannscheibe angeschlossen sein, wobei die Verbindung als Feder ausgebildet ist. Beim Verstellen des Betätigungsmittels wird damit die Feder gespannt und kann die Riemenspannscheibe in eine Stellung verbringen, in der der Riemen gespannt ist. Beim Entspannen der Feder wird der Antrieb entsprechend unterbrochen.

Nach der Erfindung ist ferner noch vorgesehen, daß vorteilhafterweise das Betätigungsmittel als eine gekröpfte am Zubehörteil gelagerte Stange mit einem Kurbelzapfen ausgebildet ist, der mit dem ersten Schenkel eines Winkelhebels verbunden ist, dessen zweiter Schenkel die Riemenspannscheibe drehbar aufnimmt. Die gekröpfte Stange ist von Hand um ihre Längsachse verstellbar, wobei sich der Kurbelzapfen entsprechend dreht und die Feder spannt oder entspannt. Es ist außerdem noch möglich, daß die gekröpfte Stange mit einem abgesetzten Zapfen versehen ist, über den die Sperrklinke entriegelbar ist und der in der Riegelstellung der Sperrklinke gegen die Sperrklinke anliegt. Bei einem Drehen der Stange wird sich dabei bei sich gleichzeitig entspannender Feder der Zapfen gegen die Sperrklinke anlegen und diese in ihre die Fangausnehmung freigebende Stellung verschwenken. Bei einem Drehen der Stange in einem die Feder spannenden Sinn wird sich der Zapfen derart gegen die Sperrklinke anlegen, daß in einer den Riemen spannenden Stellung der Riemenspannscheibe ein Weiterdrehen der Stange unmöglich wird, wobei gleichzeitig über diese Anlage die Sperrklinke in ihrer Sperrstellung arretiert wird. Hierzu kann die Sperrklinke als Winkelhebel mit einem ersten und einem zweiten Schenkel ausgebildet sein, wobei der erste Schenkel mit seinem Hakenende in der Riegelstellung der Sperrklinke in die Ausnehmung der Stütze einrastet und der zweite Schenkel mit der gekröpften Stange zusammenwirkt.

Damit der Zubehörteil in seiner Betriebsstellung automatisch verriegelt, ist nach der Erfindung noch vorgesehen, daß vorteilhafterweise die Sperrklinke entgegen der Wirkung einer Feder über die gekröpfte Stange aus ihrer Riegelstellung verschwenkbar ist.

Die abgekröpfte Stange ist über einen Handgriff verdrehbar, und nach der Erfindung können der Kurbelzapfen und der Zapfen der Stange in Vertikalebenen angeordnet sein, die miteinander einen Winkel von etwa 90° bilden.

Schließlich sieht die Erfindung noch vor, daß vorteilhafterweise der zweite Schenkel der Sperrklinke mit einer Ausnehmung versehen ist, in die der Zapfen der Stange einschwenkt, wenn die Sperrklinke nicht in die Ausnehmung der Stütze einfallen kann. Diese Maßnahme stellt sicher, daß der Riemen nicht in seiner gespannten Lage verbleibt, wenn die Sperrklinke aus irgend einem Grund nicht eingerastet ist. An der Stellung des Handgriffes der gekröpften Stange kann eine Bedienungsperson dann erkennen, daß der Zubehörteil nicht eingerastet und der Antrieb nicht übertragen werden kann.

Die Erfindung ist besonders geeignet für ein Gerät, das als ein mit einem Kleinschlepper verbindbarer Rasenmäher ausgebildet ist, und für einen Zubehörteil, der als ein Gebläse ausgebildet ist.

In der Zeichnung ist ein nachfolgend näher erläutertes Ausführungsbeispiel der Erfindung dargestellt. Es zeigt:
- Fig. 1: einen in der Garten- und Landschaftspflege einsetzbaren Kleinschlepper mit einem zwischen seinen Achsen angebauten Rasenmäher, dem ein Gebläse zugeordnet ist,
- Fig. 2: in vergrößertem Maßstab das Gebläse nach Fig. 1 in seiner Betriebsstellung,
- Fig. 3: eine ähnliche Darstellung wie Fig. 2, jedoch mit einem aus der Betriebsstellung weggeschwenkten Gebläse,
- Fig. 4: eine Ansicht in Blickrichtung der Linie 4 : 4 in Fig. 2,
- Fig. 5: eine Riemenspannvorrichtung und eine Verriegelungseinrichtung in perspektivischer Ansicht von unten,
- Fig. 6: die Riemenspannvorrichtung in einer Stellung, in der der Riemen ungespannt ist, und die Verriegelungseinrichtung in einer Stellung, in der eine Sperrklinke noch nicht verriegelt ist,
- Fig. 7: eine ähnliche Darstellung wie in Fig. 6, jedoch die Riemenspannvorrichtung in einer den Riemen spannenden Stellung und die Verriegelungseinrichtung in der verriegelten Stellung zeigend, und
- Fig. 8: die Verriegelungeinrichtung in einer Stellung, in der die Sperrklinke aus irgend einem Grund nicht in ihre Zuhaltung einfallen kann.

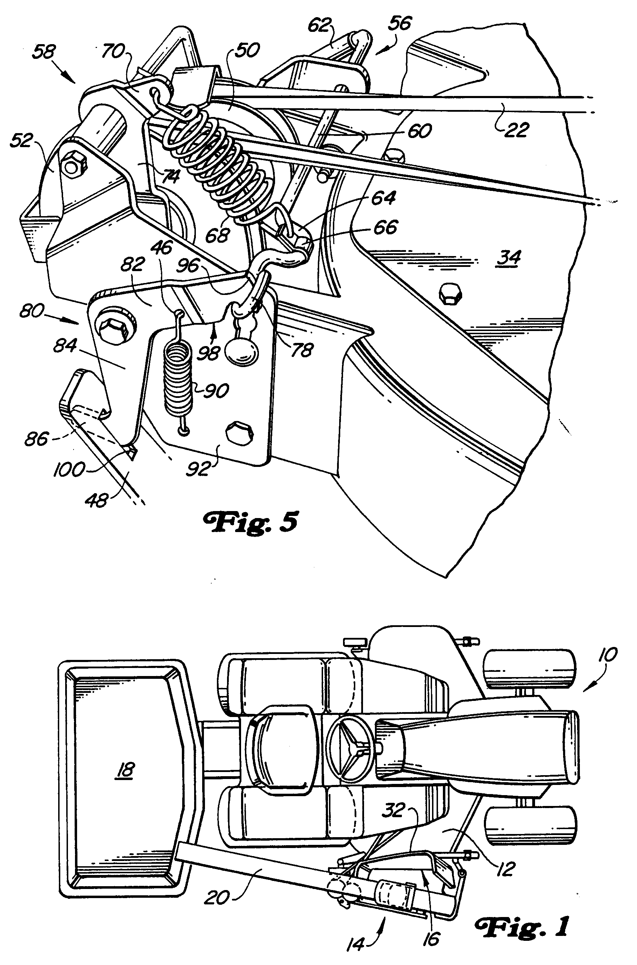

In Fig. 1 der Zeichnung ist ein in der Garten- und Landschaftspflege einsetzbares Fahrzeug in Form eines Kleinschleppers mit 10 bezeichnet, das zwischen seinen Achsen mit einem Gerät, wie einem Mähwerk mit Gehäuse 12 für den Rasenschnitt, ausgerüstet ist. Je nach der Einsatzart kann diesen Mähwerken ein Zubehörteil in Form eines Gebläses 14 oder Schaufelrades zugeordnet sein, das mit dem Gutauslaß 16 des Mähwerksgehäuses 12 verbindbar ist. In einem solchen Fall ist dann das Gebläse 14 über einen Verbindungskanal 20 mit einem Grasfangbehälter 18 verbunden. Derartige Vorrichtungen sind auch als Laubsauger einsetzbar.

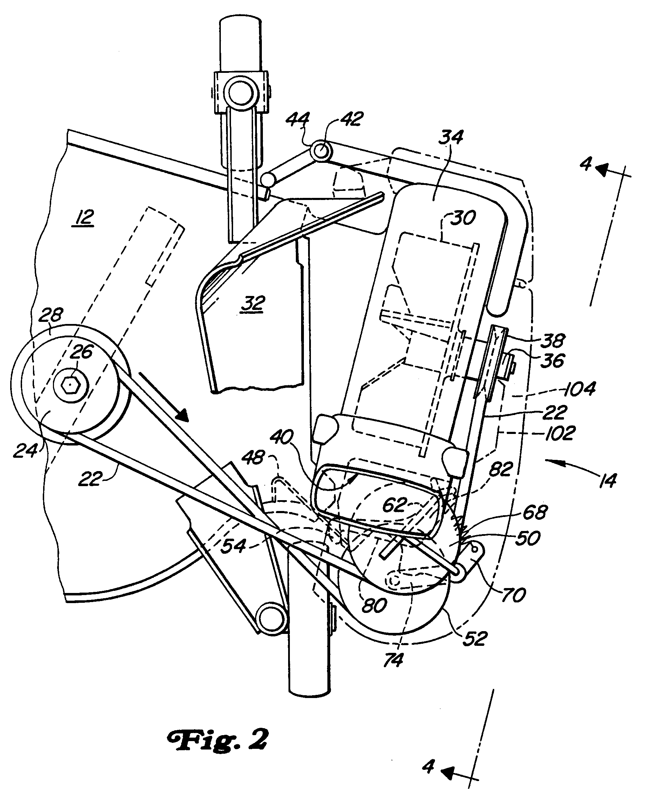

Die vorliegende Erfindung befaßt sich mit den Anschlußmöglichkeiten des Gebläses 14 an das Mähwerksgehäuse 12 sowie mit dem Antrieb des Gebläses 14, das in Fig. 2 in seiner Betriebsstellung dargestellt ist. Aus dieser Figur ist ein Riementrieb mit einem endlosen Antriebsriemen 22 erkennbar, der zunächst um eine Riemenscheibe 24 gezogen ist, die auf einer sich vertikal erstreckenden und ein Mähmesser antreibenden Welle 26 aufsitzt. Auf dieser Welle 16 kann noch eine zweite Riemenscheibe 28 mit anderem Durchmesser vorgesehen sein, um ein Gebläserad 30 des Gebläses 14 mit unterschiedlichen Geschwindigkeiten antreiben zu können. Damit das Gebläse angeschlossen werden kann, wird eine sich sonst in einer waagerechten Position befindende und am Mähwerksgehäuse 12 schwenkbar vorgesehene Auswurfklappe 32 hochgeklappt. Wie ferner aus der Fig. 2 ersichtlich ist, ist das in gestrichelten Linien angedeutete Gebläserad 30 in einem Gehäuse 34 auf einer waagerechten Welle 36 angeordnet, die von einer auf ihrem einen Ende aufsitzenden Riemenscheibe 38 über den Riemen 22 in der durch den Pfeil angedeuteten Richtung angetrieben wird. Das Gehäuse 34 ist noch in bekannter Weise mit einem Auslaßkanal 40 versehen, an den der Verbindungskanal 20 anschließbar ist, damit das von dem Mähwerk abgemähte Gut über das Gebläse 14 und durch den Verbindungskanal 20 in den Grasfangbehälter 18 gefördert werden kann.

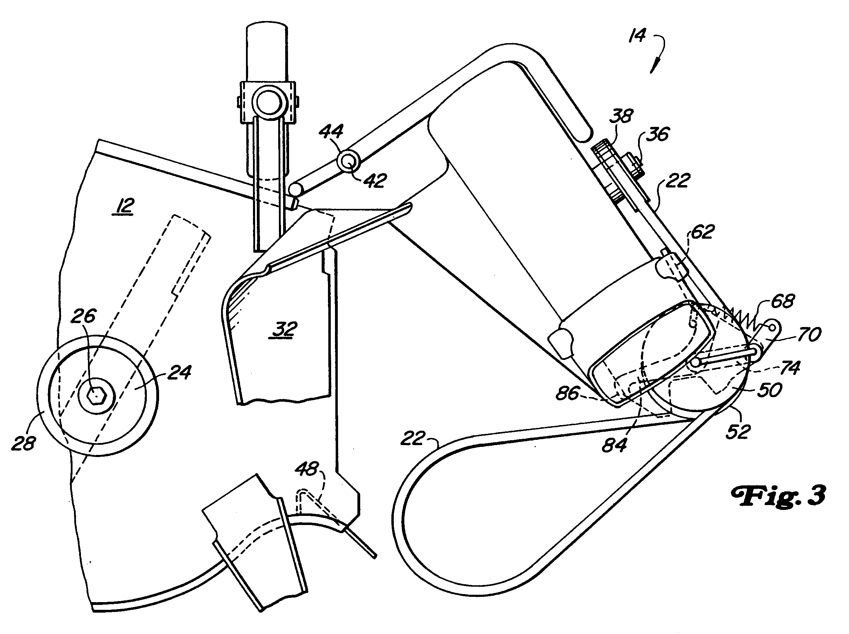

Das Gebläsegehäuse 34 ist an seinen frontseitigen Ende an das Mähwerksgehäuse 12 horizontal schwenkbar angeschlossen, wozu das Mähwerksgehäuse 12 mit einem sich vertikal erstreckenden Gelenkzapfen 42 und das Gebläsegehäuse 34 mit einer auf den Gelenkzapfen aufsteckbaren Hülse 44 versehen ist. Das rückwärtige Ende des Gebläsegehäuses 34 ist in seiner Betriebsstellung mit dem Mähwerksgehäuse 12 verriegelbar, wozu am Mähwerksgehäuse 12 eine sich nach außen und nach rückwärts erstreckende Zuhaltung 48, die auch als rückwärtige Stütze für das Gebläse dient, vorgesehen ist. Auf die entsprechenden Einzelheiten wird später noch einzugehen sein. Auf jeden Fall kann dadurch das Gebläse 14 seitlich fortgeschwenkt, wie es in Fig. 3 angedeutet ist, und leicht an- und abgebaut werden.

Da die als Antrieb dienenden Riemenscheiben 24 oder 28 und die Riemenscheibe 38 für den Antrieb des Gebläserades 30 sich in unterschiedlichen Ebenen befinden, muß der endlose Riemen 22 umgelenkt werden, wozu zwei Umlenkscheiben am rückwärtigen Ende des Gebläsegehäuses 34 vorgesehen sind, die um vertikale Achsen umlaufen und von denen eine Umlenkscheibe 50 ortsfest angeordnet und die andere als Riemenspannscheibe 52 ausgebildet ist. Der Riemen 22 verläuft damit in der durch den Pfeil in Fig. 2 angedeuteten Richtung von der Riemenscheibe 24 oder 28 über die Riemenspannscheibe 52 zu der Riemenscheibe 38 am Gebläserad 30 und von dort über die Umlenkscheibe 50 zurück zu einer der Riemenscheiben 24 oder 28 an dem Mähwerksgehäuse 12. Das Gebläse 14 ist damit in seiner Betriebsstellung immer antreibbar, wenn auch das Mähwerk angetrieben wird.

Fig. 3 zeigt das Gebläse 14 aus seiner Betriebsstellung nach seitlich außen verschwenkt mit entkuppeltem Antrieb, d. h. mit von der Riemenscheibe 24 oder 28 abgenommenen Riemen 22. Um in diese Stellung zu gelangen, wird der Riemen 22 zunächst entspannt, die Verriegelung gelöst, der Riemen 22 von der Riemenscheibe 24 oder 28 entfernt und das Gebläsegehäuse 34 um den Gelenkzapfen 42 von Hand verschwenkt. In dieser Stellung kann das Gebläse 14 nach oben von dem Gelenkzapfen 42 abgezogen werden beispielsweise dann, wenn es nicht benötigt wird oder zu Wartungsarbeiten am Gebläse oder am Mähwerk.

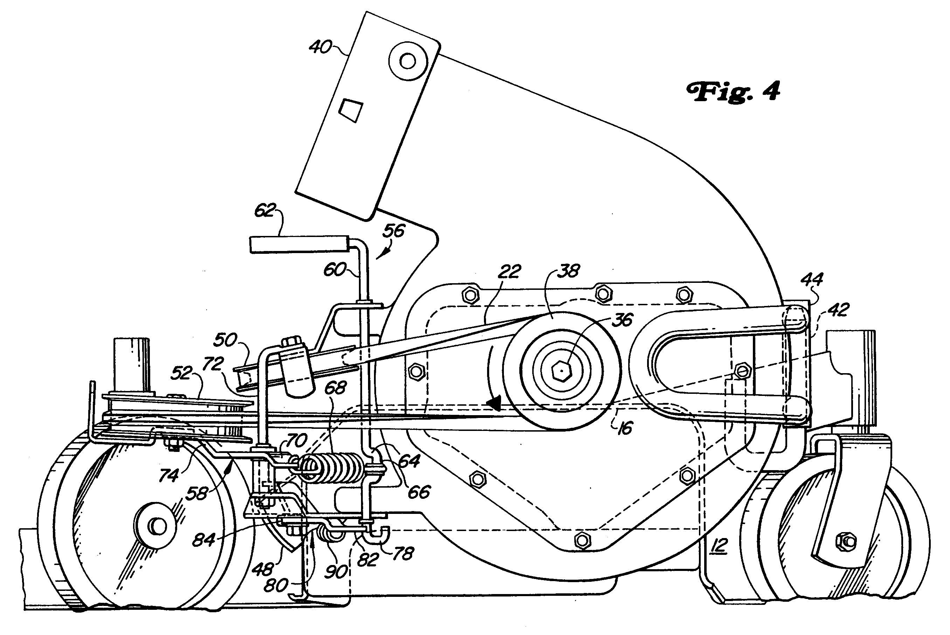

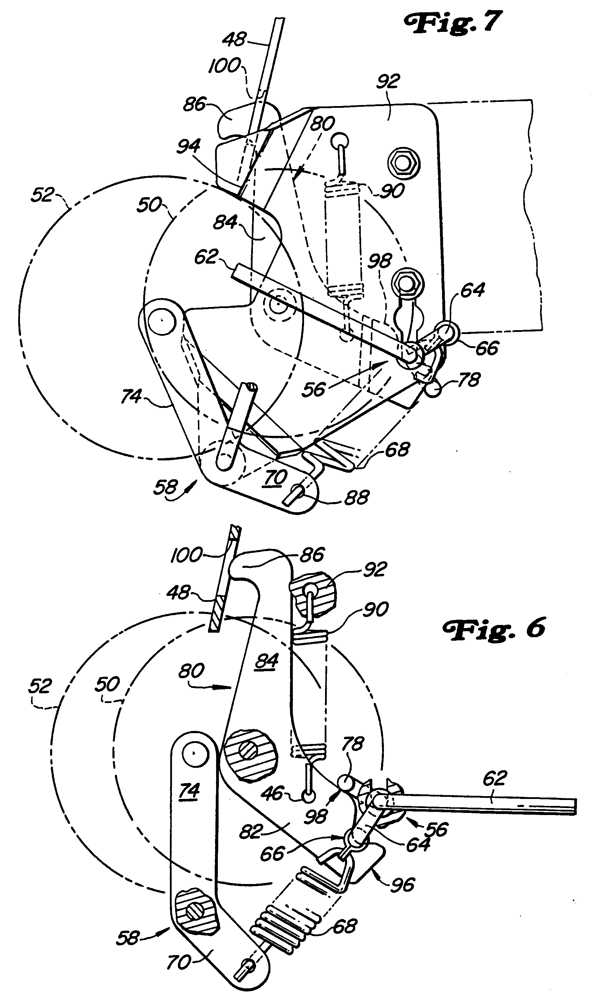

Im nachfolgenden werden unter besonderer Bezugnahme auf die Fig. 4 bis 8 die Verriegelungseinrichtung, die Riemenspannvorrichtung und das Zusammenwirken von Verriegelungseinrichtung und Riemenspannvorrichtung erörtert. Zu der Riemenspannvorrichtung gehört eine mehrfach gekröpfte, im wesentlichen vertikal gerichtete und von Hand betätigbare Stange 56 und ein unter Federwirkung stehender Winkelhebel 58. Der ungekröpfte und im eingebauten Zustand vertikal verlaufende Teil der Stange 56, um den die Stange gedreht werden kann, ist mit 60 bezeichnet. Am oberen Ende ist die Stange 56 rechtwinklig abgebogen, so daß ein waagerecht verlaufender Griffteil 62 oder erster Hebelarm zum Drehen der Stange entsteht. Etwa in ihrer Mitte ist die Stange abgekröpft, so daß dort ein zur Längsmittelachse des Teils 60 versetzter Kurbelzapfen 64 oder zweiter Hebelarm gebildet ist. Am unteren Ende der Stange 56 befindet sich eine weitere Kröpfung, die einen zur Längsmittelachse 60 der Stange parallel verlaufenden Zapfen 78 oder dritten Hebelarm bildet. Beim Ausführungsbeispiel liegen der Zapfen 78 und der Kurbelzapfen in durch den Teil 60 der Stange 56 verlaufenden Ebenen, die miteinander einen Winkel von 90° oder etwa 90° bilden. Auf dem Kurbelzapfen 64 ist ein Befestigungsteil 66 in Form einer Schelle drehbar angeordnet, an die ein Übertotpunktgestänge oder eine Feder 68 mit ihrem einen Ende angeschlossen ist, deren anderes Ende an dem Winkelhebel 58 angreift. Dieser ist mit einem ersten und einem zweiten horizontal verlaufenden Schenkel 74 und 70 versehen und auf einer vertikal gerichteten und ortsfesten Stange 72 horizontal verschwenkbar angeordnet, wobei die Feder 68 an dem zweiten Schenkel 70 angreift und die Riemenspannscheibe 52 an dem freien Ende des ersten Schenkels 74 frei drehbar vorgesehen ist. Auf diese Weise kann die Riemenspannscheibe 52 bei Betätigung der Stange 56 im drehenden Sinn aus ihrer in Fig. 7 gezeigten den Riemen 22 spannenden Stellung in ihre in Fig. 6 gezeigte den Riemen entspannende Stellung und umgekehrt verschwenkt werden. Hierbei wird der Antrieb für das Gebläse 14 aus- bzw. eingerückt.

Der am unteren Ende der Stange 56 vorgesehene Zapfen 78 wirkt mit einer Sperrklinke 80 der Verriegelungseinrichtung zusammen. Diese greift in der Betriebsstellung des Gebläses 14 in die Zuhaltung 48 ein, ist als horizontal oder etwa horizontal gerichteter Winkelhebel mit einem ersten Schenkel 82 und einem zweiten Schenkel 84 ausgebildet und in ihrem Scheitelpunkt horizontal schwenkbar gelagert. Der erste Schenkel 82 der Sperrklinke 80 wirkt an seinem freien Ende mit dem Zapfen 78 der Stange 56, die hierzu durch eine Ausnehmung 106 in der dem ersten Schenkel 82 geführt ist, zusammen, während das freie Ende des zweiten Schenkels 84 als Haken 86 ausgebildet ist, der in die Zuhaltung 48 unter der Wirkung einer Feder 90 eingreifen kann. Die Feder 90 ist hierzu mit ihrem einen Ende in eine Öffnung 46 in dem ersten Schenkel 82 der Sperrklinke 80 und mit ihrem anderen Ende in eine Öffnung in einer ortsfesten Platte 92 eingesetzt. Die Platte 92 verläuft im wesentlichen horizontal, ist mit dem Gebläsegehäuse 34 verbunden, beispielsweise verschraubt und nimmt an ihrer Unterseite die Sperrklinke 80 und an ihrer Oberseite den Winkelhebel 58 horizontal drehbar auf. Die Stange 56 ist durch die Platte 92 geführt und mit einer Scheibe versehen, die gegen die Unterseite der Platte anliegt, so daß sie durch Hochziehen des Griffteils 62 die Sperrklinke 80 nicht freigeben kann. Außerdem ist der Teil 60 der Stange 56 noch in seinem oberen Bereich in einer Lasche geführt und dort mit einer Scheibe versehen, die gegen die Oberseite der Lasche anliegt. Auf diese Weise ist die Stange im eingebauten Zustand drehbar aber nicht höhenverstellbar. Die Feder 90 liegt unter der Platte 92 und ist derart angeordnet, daß sie die Sperrklinke mit Bezug auf Fig. 5 im Uhrzeigerdrehsinn oder mit Bezug auf die Fig. 6 und 7 entgegen dem Uhrzeigerdrehsinn verstellen will.

Im weiteren wird unter besonderer Bezugnahme auf die Fig. 6, 7 und 8 auf die Wirkungsweise der Riemenspannvorrichtung und der Verriegelungseinrichtung eingegangen. Fig. 6 zeigt die Sperrklinke 80 im entriegelten oder gerade noch nicht verriegelten Zustand und die Riemenspannscheibe 52 in einer Stellung, in der eine Antriebsverbindung zu der Riemenscheibe 38 am Gebläse 14 unterbrochen und der Riemen 22 entspannt ist. Die Feder 68 ist ebenfalls nicht gespannt. Bei einer Bewegung des Griffteils 62 aus seiner in Fig. 6 gezeigten Stellung im Uhrzeigerdrehsinn und damit auch einer Drehbewegung des Kurbelzapfens 64 in demselben Sinn wird die Feder 68 gespannt und dadurch der Winkelhebel 58 und damit auch die Riemenspannscheibe 52 entgegen dem Uhrzeigerdrehsinn in ihre in Fig. 7 gezeigten Stellungen verstellt, in der der Riemen 22 gespannt und eine Antriebsverbindung für das Gebläse 14 hergestellt ist. Bei der Drehbewegung des Kurbelzapfens 64 im Uhrzeigerdrehsinn in die Stellung in Fig. 7 wird die Feder 68 über ihre Totpunktlage hinaus verschwenkt. In dieser Stellung liegt auch der Zapfen 78 der Stange 56 gegen eine Stelle 96 an der Stirnseite des ersten Schenkels 82 der Sperrklinke 80 an, wodurch eine weitere Bewegung der Stange 56 im Uhrzeigerdrehsinn verhindert und die Feder 68 in ihrer gespannten Stellung festgesetzt wird, um die Riemenspannung in dem Keilriemen 22 beibehalten zu können.

Durch die Anlage des Zapfens 78 der Stange 56 an die Stirnseite des ersten Schenkels 82 der Sperrklinke 80, wie es in den Fig. 5 und 7 gezeigt ist, wird auch die Sperrklinke 80 in ihrer Riegelstellung arretiert, in der sie mit ihrem Hakenende 86 in ein Langloch 100 in der ortsfesten Zuhaltung 48 unter der Wirkung der Feder 90 eingreift. Ein Entriegeln der Sperrklinke 80 wird ebenfalls über die Stange 56, und zwar deren Zapfen 78 erreicht. Wie zum Entspannen des Riemens 22 wird auch zum Entriegeln der Verriegelungseinrichtung der Griffteil 62 aus seiner in Fig. 7 gezeigten Stellung in seine in Fig. 6 gezeigte Stellung entgegen dem Uhrzeigerdrehsinn verstellt. Dabei verschwenkt auch der Zapfen 78 aus seiner Stellung in Fig. 7 entgegen dem Uhrzeigerdrehsinn und gibt zunächst die Stirnseite des ersten Schenkels 82 der Sperrklinke 80 frei. Bei seiner weiteren Schwenkbewegung entgegen dem Uhrzeigerdrehsinn legt sich dann der Zapfen 78 gegen eine Stelle 98 an der Seitenfläche des ersten Schenkels 82 der Sperrklinke 80 an und verschwenkt bei einer weiteren Bewegung des Griffteils 62 entgegen dem Uhrzeigerdrehsinn die Sperrklinke 80 mit Bezug auf Fig. 6 im Uhrzeigerdrehsinn, wobei sich das Hakenende 86 der Sperrklinke 80 aus dem Langloch 100 der Zuhaltung 48 löst.

In der in Fig. 6 dargestellten Stellung, in der das Hakenende 86 gerade in das Langloch 100 eintreten will oder gerade aus diesem verschwenkt wurde, ist die Feder 68 nicht mehr gespannt und der Winkelhebel 58 mit seiner Riemenspannscheibe 52 ist in seine dargestellte Stellung zurückgeführt, in der der Riemen nicht mehr gespannt ist. In dieser Stellung kann dann die Bedienungsperson den Riemen 22 leicht von der Riemenscheibe 24 oder 28 am Mäher abnehmen und das Gebläse in seine in Fig. 3 wiedergegebene Stellung ziehen. Um dies zu erleichtern, ist in der Schutzabdeckung 104 für die Riemenscheibe 38 und den Riemen 22 an der Aussenseite des Gebläses eine Einkehlung 102 oder dergleichen vorgesehen, in die die Bedienungsperson mit ihren Fingern eingreifen kann. In der Stellung nach Fig. 3 sind Wartungsarbeiten möglich und auch ein Entfernen des Gebläses.

Das Gebläse 14 kann auch äußerst leicht und schnell angebaut werden. Um dies zu bewerkstelligen, hebt die Bedienungsperson das Gebläse in eine Stellung, in der sich die Hülse 44 über dem Gelenkzapfen 42 befindet und auf den Gelenkzapfen 42 geschoben werden kann. Danach wird die Auswurfklappe 32 hochgeklappt, damit das Gebläse in seine Stellung nach Fig. 2 verschwenkt werden kann. Damit dann das Hakenende 86 der Sperrklinke 80 leicht in das Langloch einfallen kann, ist die Platte 92 noch mit einem Führungsblech 94 odgl. versehen, das sich bei der Schwenkbewegung des Gebläses 14 auf die Oberseite der Zuhaltung 48 aufschiebt und auf dieser entlanggleitet, wodurch das rückwärtige Ende des Gebläsegehäuses 34 abgestützt und das Hakenende 86 zu dem Langloch 100 ausgerichtet wird. Die Zuhaltung 48 ist, wie aus Fig. 5 am besten ersichtlich ist, hochkant angeordnet und so ausgebildet, daß beim Einschwenken des Gebläses 14 die entsprechend abgerundete Seite des Hakenendes gegen die Zuhaltung zur Anlage kommt und die Sperrklinke derart verstellt, daß sie beim Erreichen des Langloches selbsttätig in dieses unter der Wirkung der Feder 90 einfallen kann.

Da das Hakenende 86 der Sperrklinke 80 automatisch in die Zuhaltung 48 eingreift, kann die Bedienungsperson danach, falls noch nicht geschehen, den noch nicht gespannten Antriebsriemen 22 um eine der Riemenscheiben 24 oder 28 legen und nachfolgend den Riemen 22 spannen, indem sie den Griffteil 62 aus seiner in Fig. 6 gezeigten Stellung in die nach Fig. 7 durch Drücken verstellt. Entsprechend wird dann auch der Kurbelzapfen 64 der Stange 56 in die Stellung nach Fig. 7 wandern, wobei die Feder 68 sich auseinander zieht und den Winkelhebel 58 zum Spannen des Riemens 22 in die Stellung nach Fig. 7 verschwenkt. Gleichzeitig wird die Feder 90, die zwischen Sperrklinke 80 und Platte 92 gespannt ist, das Hakenende 86 der Sperrklinke 80 in dem Langloch 100 der Zuhaltung 48 und damit in der Riegelstellung halten. Damit kann das Spannen des Riemens gleichzeitig oder fast gleichzeitig mit dem Verriegeln des Gebläses 14 erfolgen. Um die Sperrklinke 80 in ihrer Riegelstellung zu halten und um zu verhindern, daß sie nicht ungewollt austritt, greift der Zapfen 78 der Stange 56 hinter den ersten Schenkel 82 der Sperrklinke 80 und liegt dort an der Stelle 96 gegen die Stirnseite an. Der Zapfen dient damit als Sperre, die verhindert, daß die Sperrklinke 80 aus dem Langloch 100 der Zuhaltung 48 austreten kann. Zusammenfassend ist damit festzustellen, daß die Sperrklinke 80 auch mechanisch in ihrer Riegelstellung arretiert ist, solange der Riemen 22 gespannt ist.

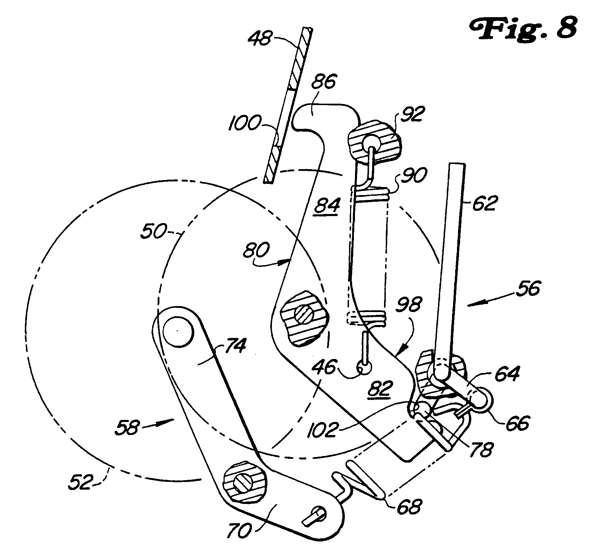

Sollte das Hakenende 86 infolge schlechter Ausrichtung oder anderer Gründe in der Betriebsstellung des Gebläses 14 nicht in das Langloch 100 an der Zuhaltung 48 einfallen können, kann der Riemen 22 nicht gespannt und das Gebläse 14 nicht angetrieben werden. Ein derartiger Zustand ist in Fig. 8 angedeutet. Aus dieser ist zu erkennen, daß das Hakenende 86 nicht in das Langloch 100 eingetreten ist, obwohl die Feder 90, die an dem ersten Schenkel 82 der Sperrklinke 80 angreift, gespannt ist, und daß dann die Sperrklinke eine Stellung einnimmt, in der der Zapfen 78 der Stange nicht gegen die Stirnseite des ersten Schenkels 82 der Sperrklinke zu Anlage kommen kann, sondern an dieser vorbei schwenkt und in die Ausnehmung 106 eintritt. In dieser Stellung ist die Feder 68 nicht derartig gespannt, daß sie den Antrieb für das Gebläse 14 einrücken oder die Riemenspannscheibe 52 in ihrer in Fig. 7 gezeigten Stellung halten könnte. Bei einem nicht in das Langloch 100 der Zuhaltung 48 eintretenden Hakenende 86 kann dann der Griffteil bis etwas über seine 12 Uhrstellung verschwenkt werden, und zwar über seine in Fig. 7 dargestellte 10 Uhrstellung hinaus. Eine derartige Griffteilstellung läßt die Bedienungsperson erkennen, daß der Riemen 22 nicht ausreichend gespannt ist, um das Gebläse 14 antreiben zu können, und daß das Gebläse nicht verriegelt ist. In einer solchen Situation muß der Griffteil 62 wieder in seine in Fig. 6 gezeigte Stellung zurückgeschwenkt und das Gebläse in seine Stellung nach Fig. 3 verstellt werden. Danach wird das Gebläse wieder in seine Betriebsstellung verbracht und verriegelt, sofern keine bleibenden Beschädigungen an der Verriegelungseinrichtung aufgetreten sind.

## Patentansprüche

1. Gerät und Zubehörteil, der mit dem Gerät horizontal schwenkbar verbunden, in einer Betriebsstellung festsetzbar und mit einer von dem Gerät aus antreibbaren Komponente versehen ist, wobei der Antrieb zwischen Gerät und Komponente eine Vorrichtung zum Unterbrechen des Antriebes aufweist, dadurch gekennzeichnet, daß der Zubehörteil mit dem Gerät in der Betriebsstellung verriegelbar ist und die Vorrichtung zum Unterbrechen des Antriebes Betätigungsmittel aufweist, über die der Zubehörteil entriegelbar ist.

2. Kombination nach Anspruch 1, dadurch gekennzeichnet, daß der Antrieb zwischen Gerät und Komponente des Zubehörteils als Riementrieb ausgebildet ist und die Vorrichtung zum Unterbrechen des Antriebes eine Riemenspannvorrichtung aufweist.

3. Kombination nach Anspruch 1, dadurch gekennzeichnet, daß das Gerät mit einer Stütze (48) versehen ist, auf die sich der Zubehörteil bei seiner Bewegung in die Betriebsstellung aufschiebt.

4. Kombination nach Anspruch 1 und 3, dadurch gekennzeichnet, daß der Zubehörteil mit einer verstellbaren Sperrklinke (80) versehen ist, die in der Betriebsstellung des Zubehörteils selbsttätig in eine Ausnehmung (100) in der Stütze (48) eingreift.

5. Kombination nach Anspruch 3, dadurch gekennzeichnet, daß mit Abstand zu der Stütze (48) an dem Gerät ein Gelenkzapfen (42) oder eine Hülse (44) und an dem Zubehörteil eine Hülse (44) oder ein Gelenkzapfen (42) vorgesehen sind, wobei der Gelenkzapfen (42) die Hülse (44) oder die Hülse (44) den Gelenkzapfen (42) lösbar aufnimmt.

6. Kombination nach Anspruch 2, dadurch gekennzeichnet, daß die Riemenspannvorrichtung eine am Zubehörteil verschwenkbar gelagerte Riemenspannscheibe (52) aufweist.

7. Kombination nach einem oder mehreren der vorherigen Ansprüche, dadurch gekennzeichnet, daß das Betätigungsmittel über eine Verbindung, die in und aus einer Übertotpunktstellung verstellbar ist, an die Riemenspannscheibe (52) angeschlossen ist.

8. Kombination nach Anspruch 7, dadurch gekennzeichnet, daß die Verbindung als Feder (68) ausgebildet ist.

9. Kombination nach Anspruch 6, dadurch gekennzeichnet, daß das Betätigungsmittel als eine gekröpfte am Zubehörteil gelagerte Stange (56) mit einem Kurbelzapfen (64) ausgebildet ist, der mit dem ersten Schenkel (70) eines Winkelhebels (58) verbunden ist, dessen zweiter Schenkel (74) die Riemenspannscheibe (52) drehbar aufnimmt.

10. Kombination nach Anspruch 9, dadurch gekennzeichnet, daß die gekröpfte Stange (56) mit einem abgesetzten Zapfen (78) versehen ist, über den die Sperrklinke (80) entriegelbar ist und der in der Riegelstellung der Sperrklinke (80) gegen die Sperrklinke (80) anliegt.

11. Kombination nach einem oder mehreren der Ansprüche 4-10, dadurch gekennzeichnet, daß die Sperrklinke (80) als Winkelhebel mit einem ersten und einem zweiten Schenkel (82, 84) ausgebildet ist, wobei der erste Schenkel (84) mit seinem Hakenende (86) in der Riegelstellung der Sperrklinke (80) in die Ausnehmung (100) der Stütze (48) einrastet und der zweite Schenkel (82) mit der gekröpften Stange (56) zusammenwirkt.

12. Kombination nach Anspruch 11, dadurch gekennzeichnet, daß die Sperrklinke (80) entgegen der Wirkung einer Feder (90) über die gekröpfte Stange (56) aus ihrer Riegelstellung verschwenkbar ist.

13. Kombination nach einem oder mehreren der vorherigen Ansprüche, dadurch gekennzeichnet, daß der Kurbelzapfen (64) und der Zapfen (78) der Stange (56) in Vertikalebenen angeordnet sind, die miteinander einen Winkel von etwa 90° bilden.

14. Kombination nach Anspruch 11 oder 12, dadurch gekennzeichnet, daß der zweite Schenkel (82) der Sperrklinke (80) mit einer Ausnehmung (106) versehen ist, in die der Zapfen (78) der Stange (56) einschwenkt, wenn die Sperrklinke (80) nicht in die Ausnehmung (100) der Stütze (48) einfallen kann.

15. Kombination nach einem oder mehreren der vorherigen Ansprüche, dadurch gekennzeichnet, daß das Gerät als ein mit einem Kleinschlepper (10) verbindbarer Rasenmäher und der Zubehörteil als ein Gebläse (14) ausgebildet sind.

## Claims

1. An implement and an accessory which is horizontally pivotally connected to the implement, can be fixed in an operating position and is provided with a component which can be driven from the implement, wherein the drive between the implement and the component comprises a device for interrupting the drive, characterized in that the accessory can be locked to the implement in the operating position and the device for interrupting the drive comprises actuating means through which the accessory can be unlocked.

2. A combination according to claim 1, characterized in that the drive between the implement and the component of the accessory is in the form of a belt drive and device for interrupting the drive comprises a belt tensioning device.

3. A combination according to claim 1, characterized in that the implement is provided with an abutment (48), on which the accessory bears in its movement into the operating position.

4. A combination according to claim[s] 1 and 3, characterized in that the accessory is provided with an adjustable latch (80), which engages automatically in a recess (100) in the abutment (48) in the operating position of the accessory.

5. A combination according to claim 3, characterized in that a hinge pin (42) or a sleeve (44) is provided on the implement spaced from the abutment (48) and a sleeve (44) or a hinge pin (42) is provided on the accessory, wherein the hinge pin (42) receives the sleeve (44) releasably or the sleeve (44) receives the hinge pin (42) releasably.

6. A combination according to claim 2, characterized in that the belt tensioning device comprises a belt tensioning pulley (52) pivotally mounted on the accessory.

7. A combination according to one or more of the preceding claims, characterized in that the actuating means is connected to the belt tensioning pulley (52) through a coupling which can be shifted into and out of an over-centre position.

8. A combination according to claim 7, characterized in that the coupling is in the form of a spring (68).

9. A combination according to claim 6, characterized in that the actuating means is in the form of a cranked rod (56) mounted on the accessory, with a crank pin (64) which is connected to the first arm (70) of a bell crank lever (58), whose second arm (74) receives the belt tensioning pulley (52) rotatably.

10. A combination according to claim 9, characterized in that the cranked rod (56) is provided with an offset pin (78) through which the latch (80) can be unlocked and which bears against the latch (80) in the locking position of the latch (80).

11. A combination according to one or more of claims 4 to 10, characterized in that the latch (80) is in the form of a bell crank lever with first and second arms (82, 84), wherein a hooked end (86) of the first arm (84) latches into the recess (100) in the abutment (48) in the locking position of the latch (80) and the second arm (82) cooperates with the cranked rod (56).

12. A combination according to claim 11, characterized in that the latch (80) can be pivoted by the cranked rod (56) out of its locking position against the action of a spring (90).

13. A combination according to one or more of the preceding claims, characterized in that the crank pin (64) and the pin (78) of the rod (56) are arranged in vertical planes forming an angle of about 90° with one another.

14. A combination according to claim 11 or 12, characterized in that the second arm (82) of the latch (80) is provided with a recess (106), into which the pin (78) of the rod (56) swings when the latch (80) is unable to drop into the recess (100) of the abutment (48).

15. A combination according to one or more of the preceding claims, characterized in that the implement is in the form of a lawnmower which can be attached to a small tractor (10) and the accessory is in the form of a blower (14).

## Revendications

1. Appareil et équipement accessoire, qui est relié à l'appareil de manière à pouvoir pivoter horizontalement, peut être bloqué dans une position de fonctionnement et est équipé d'un composant pouvant être entraîné à partir de l'appareil, le dispositif d'entraînement entre l'appareil et le composant possédant un dispositif servant à interrompre l'entraînement, caractérisée en ce que l'équipement accessoire peut être verrouillé à l'appareil dans la position de fonctionnement et que le dispositif d'interruption de l'entraînement comprend des moyens d'actionnement, au moyen desquels l'équipement accessoire peut être déverrouillé.

2. Combinaison selon la revendication 1, caractérisée en ce que le dispositif d'entraînement entre l'appareil et le composant de l'équipement accessoire est agencé sous la forme d'un dispositif d'entraînement à courroie et que le dispositif pour interrompre l'entraînement comporte un dispositif de tension de la courroie.

3. Combinaison selon la revendication 1, caractérisée en ce que l'appareil est équipé d'un élément de support (48), sur lequel l'équipement accessoire est repoussé lors de sa venue dans la position de fonctionnement.

4. Combinaison selon les revendications 1 et 3, caractérisée en ce que l'équipement accessoire est équipé d'un cliquet de blocage déplaçable (80), qui, lorsque l'équipement accessoire est dans la position de fonctionnement, s'engage automatiquement dans une ouverture (100) aménagée dans l'élément de support (48).

5. Combinaison selon la revendication 3, caractérisée en ce qu'à distance de l'élément de support (48), un axe d'articulation (42) ou une douille (44) est prévu sur l'appareil et une douille (44) ou un axe d'articulation (42) est prévu sur l'équipement accessoire, l'axe d'articulation (42) logeant de façon amovible la douille (44) ou bien la douille (44) logeant de façon amovible l'axe d'articulation (42).

6. Combinaison selon la revendication 2, caractérisée en ce que le dispositif de tension de la courroie comporte une poulie (52) de tension de la courroie, qui est montée de manière à pouvoir pivoter sur l'équipement accessoire.

7. Combinaison selon une ou plusieurs des revendications précédentes, caractérisée en ce que les moyens d'actionnement sont raccordés à la poulie (52) de la tension de la courroie par l'intermédiaire d'une liaison, qui peut être amenée dans une position de point mort haut et peut en outre être écartée.

8. Combinaison selon la revendication 7, caractérisé en ce que la liaison est agencée sous la forme d'un ressort (68).

9. Combinaison selon la revendication 6, caractérisée en ce que les moyens d'actionnement sont agencés sous la forme d'une barre coudée (56), qui est montée sur l'équipement accessoire et comporte un maneton (64), qui est relié à la première branche (70) d'un levier coudé (58), dont la seconde branche (74) reçoit la poulie (52) de tension de la courroie, de manière qu'elle puisse tourner.

10. Combinaison selon la revendication 9, caractérisée en ce que la barre coudée (56) comporte un embout décalé (78), au moyen duquel le cliquet de blocage (88) peut être déverrouillé et qui s'applique contre le cliquet de blocage (80) lorsque ce dernier est dans la position verrouillée.

11. Combinaison selon une ou plusieurs des revendications 4-10, caractérisée en ce que le cliquet de blocage (80) est agencé sous la forme d'un levier coudé possédant les première et seconde branches (82,84), la première branche (84) s'encliquetant par son extrémité en forme de crochet (86) dans l'ouverture (100) de l'élément de support (48), lorsque le cliquet de blocage (80) est dans la position verrouillée, tandis que la seconde branche (82) coopère avec la barre coudée (56).

12. Combinaison selon la revendication 11, caractérisée en ce que le cliquet de blocage (80) peut pivoter à partir de sa position verrouillée sous l'action de la barre coudée (56), à l'encontre de l'action d'un ressort (90).

13. Combinaison selon une ou plusieurs des revendications précédentes, caractérisée en ce que le maneton (64) et l'embout (78) de la barre (56) sont disposés dans des plans verticaux, qui font entre eux un angle d'environ 90°.

14. Combinaison selon la revendication 11 ou 12, caractérisée en ce que la seconde branche (82) du cliquet de blocage (80) est pourvue d'une ouverture (106), dans laquelle s'engage en pivotant l'embout (78) de la barre (56), lorsque le cliquet de blocage (80) ne peut pas pénétrer dans l'ouverture (100) de l'élément de support (48).

15. Combinaison selon une ou plusieurs des revendications précédentes, caractérisée en ce que l'appareil est agencé sous la forme d'une tondeuse à gazon, qui peut être reliée à un mini-tracteur (10) et que l'équipement accessoire est réalisé sous la forme d'un ventilateur (14).
